# EUROPÄISCHE PATENTSCHRIFT

(11) **EP 2 785 232 B1**
(45) Veröffentlichungstag und Bekanntmachung des Hinweises auf die Patenterteilung: **26.04.2017**
(21) Anmeldenummer: 12794247.2
(22) Anmeldetag: 21.11.2012
(51) Int. Cl.: A47J 43/08, A47J 43/046

(54) **BEARBEITUNGSAUFSATZ FÜR EIN ELEKTRISCH BETREIBBARES KÜCHENGERÄT SOWIE KÜCHENGERÄT**
PROCESSING ATTACHMENT FOR AN ELECTRICALLY OPERABLE KITCHEN DEVICE, AND KITCHEN DEVICE
ÉLÉMENT RAPPORTÉ DE TRAITEMENT POUR UN APPAREIL DE CUISINE FONCTIONNANT À L'ÉLECTRICITÉ AINSI QU'APPAREIL DE CUISINE

(30) Priorität: 29.11.2011 DE 102011087287
(43) Veröffentlichungstag der Anmeldung: 08.10.2014
(73) Patentinhaber: BSH Hausgeräte GmbH, 81739 München (DE)
(72) Erfinder: CATER, Matej, 3301 Petrovce (SI); JEGRISNIK, Uros, 3313 Polzela (SI); MAZEJ, Stanislav, 3303 Gomilsko (SI)
(86) Internationale Anmeldenummer: PCT/EP2012/073183
(87) Internationale Veröffentlichungsnummer: WO 2013/079374

(56) Entgegenhaltungen:
- WO-A1-01/74222
- DE-A1- 3 045 088
- DE-B- 1 185 783
- FR-A1- 2 758 451

## Beschreibung

### Gebiet der Erfindung

Die Erfindung betrifft einen Bearbeitungsaufsatz für ein elektrisch betreibbares Küchengerät sowie ein Küchengerät mit einem solchen Bearbeitungsaufsatz.

### Hintergrund der Erfindung

Aus DE 100 16 330 A1 der Bosch und Siemens Haushaltsgeräte GmbH ist ein Haushaltgerät mit einem Getriebe bekannt, bei der zur Befestigung des Getriebes an der Befestigungsstelle oder den Befestigungsstellen ein eine direkte Berührung von Gehäuseteilen mit der Befestigungsstelle oder den Befestigungsstellen wenigstens annähernd unterbindendes schwingungsdämpfendes Element eingefügt ist. Es erfolgt auf kostengünstige Weise eine erhebliche Dämpfung der von dem befestigten Getriebe ausgehenden und Geräusche verursachenden Schwingungen.

Aus JP P2003-38339 A ist ein Entsafter bekannt, der im Standfuß ein Getriebe mit einer Vibrationsentkopplung aus zwei vibroisolierenden Materialien aufweist. Die offenbarte Konstruktion soll Vibrationen des Motors und Vibrationen des Trennungskorbs und des Schneidmessers, hervorgerufen durch asymmetrische Rotation ausgelöst durch Anhaftungen von Trester am Trennungskorb, absorbieren und das Gehäuse des Entsafters gegenüber Korb und Motor entkoppeln.

Aus DE 35 38 967 C1 ist ein Zusatzgerät für eine Küchenmaschine, insbesondere für einen mit einem Arbeitswerkzeug versehenen Stabmixer, bekannt, das ein Untersetzungsgetriebe aufweist. Durch das im Deckel des Zusatzgerätes ausgebildete Getriebe wird bei geringer Drehgeschwindigkeit ein verhältnismäßig hohes Drehmoment erzeugt.

In der DE 1 185 783 wird eine Küchenmaschine offenbart, die zwei lösbar miteinander verbundene, als Boden und Deckel ausgebildete Gehäuseteile aufweist und die darin einen Elektromotor und ein mit diesem zu einer Einbaueinheit vereinigten Untersetzungsgetriebe bestehendem Antriebsaggregat aufnimmt, wobei das Antriebsaggregat über elastische Zwischenlagen zu/in den Gehäuseteilen eingespannt ist. Das Antriebsaggregat weist eine Vielzahl von Berührungspunkten auf, die eine Weiterleitung von Vibrationen begünstigen. Eine weitere Druckschrift FR 2 758 451 offenbart einen herkömmlichen Standmixer, bei dem ein Elektromotor/Getriebe über Dämpfungselemente an einem Aufsatzgehäuse, sowie Schrauben an einem auf den Dämpfungselementen aufliegenden Behältnisboden des elektrisch betreibbaren Küchengeräts/Standmixers befestigt ist.

In der Druckschrift WO 01/74222 A1 wird ferner eine Küchenmaschine offenbart, die in ihrem Gehäuse ein Antriebsaggregat aufnimmt, das mit einer ersten und zweiten Abtriebswelle gekoppelt ist. Ein Aufsatzgehäuse des Gehäuses ist mit einem Boden des Gehäuses anhand von Schrauben verbunden: Zur Vermeidung oder Verringerung von Vibrationen sind keine Dämpfungselemente am Gehäuse vorgesehen.

Die Druckschrift CH 360 775 offenbart einen Bearbeitungsaufsatz für ein elektrisch betreibbares Küchengerät, das ein Aufsatzgehäuse umfasst, in dem ein Motor des Küchengeräts aufgenommen ist. Der Bearbeitungsaufsatz weist eine Werkzeugaufnahme auf, die mit einem sich außerhalb des Bearbeitungsaufsatzes befindlichen Getriebes verbunden werden kann. Damit ist das Getriebe gegenüber dem Aufsatzgehäuse mechanisch entkoppelt.

### Der Erfindung zugrundeliegende Aufgabe

Der Erfindung liegt die Aufgabe zugrunde, einen Bearbeitungsaufsatz für ein motorbetriebenes Küchengerät zu schaffen, der gegenüber dem Stand der Technik vorteilhafte Eigenschaften aufweist. Insbesondere sollen Vibrationen, die beim Betrieb des Bearbeitungsaufsatzes auftreten können, möglichst nicht auf das Aufsatzgehäuse übergehen.

### Erfindungsgemäße Lösung

Die Bezugszeichen in sämtlichen Ansprüchen haben keine einschränkende Wirkung, sondern sollen lediglich deren Lesbarkeit verbessern.

Ein erfindungsgemäßer Bearbeitungsaufsatz, der mit einem motorbetriebenen Küchengerät genutzt werden kann, umfasst ein Aufsatzgehäuse, eine von einem Motor des Küchengerätes in Drehung versetzbare Werkzeugaufnahme, sowie ein Getriebe, das eine Kraft zwischen Motor des Küchengerätes und Werkzeug übertragen kann. Die der Erfindung zugrundeliegende Aufgabe wird erfindungsgemäß dadurch gelöst, dass das Getriebe gegenüber dem Aufsatzgehäuse mechanisch entkoppelt ist. Das Getriebe kann über das Dämpfungselement oder die Dämpfungselemente zur mechanischen Entkopplung hängend am Aufsatzgehäuse befestigt werden. In diesem Fall könnte das Getriebe über die Dämpfungselemente beispielsweise mit der Innenseite einer Oberseite des Aufsatzgehäuses verbunden werden, so dass es von diesem in der Betriebsstellung des Bearbeitungsaufsatzes herabhängt, ohne dass es weitere Berührungspunkte mit dem Aufsatzgehäuse oder anderen möglicherweise in Vibration versetzbaren Teilen hätte. Das wäre besonders vorteilhaft, um eine Propagation von Schwingungen des Getriebes vermeiden zu können. Zudem könnte man in Folge dessen eine Bodenplatte des Aufsatzgehäuses einsparen, falls diese keine andere Aufgabe hätte, als das Getriebe zu tragen. Statt einer hängenden Montage des Getriebes am Aufsatzgehäuse mittels Dämpfungselementen käme auch eine hängende Montage an anderen Teilen des Bearbeitungsaufsatzes in Frage, solange dadurch die erfindungsgemäße Lösung einer mechanischen Entkopplung von Getriebe und Aufsatzgehäuse erreicht werden kann.
Ein Bearbeitungsaufsatz im Sinne der Erfindung ist ein Zusatzteil für ein Küchengerät, das das Küchengerät um Funktionen erweitert, z.B. spezielle Werkzeuge zur Essensbearbeitung umfasst oder aufnehmen kann. Der Bearbeitungsaufsatz kann einen Griff umfassen, um dem Benutzer das Aufsetzen auf und das Abnehmen des Bearbeitungsaufsatzes von dem Küchengerät zu erleichtern. Ein Küchengerät im Sinne der Erfindung ist jegliches elektrisch betreibbare Gerät, das in einer Küche zum Einsatz kommen kann, um beispielsweise Nahrungsmittel zu bearbeiten. Dabei kann es sich beispielsweise um ein Standküchengerät, aber auch ein Handküchengerät wie einen Pürierstab handeln.

Eine Werkzeugaufnahme im Sinne der Erfindung ist eine Schnittstelle zur Verbindung eines Werkzeugs, z.B. zur Essensbearbeitung, mit einer Welle. Die Verbindung des Werkzeugs mit der Werkzeugaufnahme kann permanent oder lösbar ausgeführt sein.

Ein Getriebe im Sinne der Erfindung ist ein unmittelbares Zusammenwirken von Rädern und/oder Zahnrädern, das Motor und Werkzeugaufnahme verbindet und die Drehzahl des Motors so reguliert, dass der beabsichtigte Bearbeitungsvorgang z.B. an Nahrungsmitteln ausgeführt werden kann. Die Räder und/oder Zahnräder können aber auch mittelbar über Riemen oder vergleichbare Elemente miteinander in Verbindung stehen. Beispielsweise kann von einem Untersetzungsgetriebe eine hohe Motordrehzahl reduziert und auf die Werkzeugaufnahme übertragen werden, so dass vom Werkzeug ein höheres Drehmoment zur Nahrungsmittelbearbeitung ausgehen kann, z.B. zum Entsaften oder zu vergleichbaren Zwecken. Andersherum wäre auch denkbar, ein Übersetzungsgetriebe zu nutzen, so dass das Werkzeug mit einer höheren Geschwindigkeit rotieren kann, z.B. für das Aufschlagen von Sahne oder zu vergleichbaren Zwecken. Das Getriebe kann über die genannten Teile hinaus auch Gehäuse- und Montageelemente, wie eine Getriebelagerung und/oder ein Getriebegehäuse umfassen, an oder in welchen beispielsweise die beweglichen Teile des Getriebes montiert sein können, um beispielsweise den Einbau in den Bearbeitungsaufsatz einer Küchenmaschine zu erleichtern oder gar erst zu ermöglichen.

Als mechanische Entkopplung bezeichnet man im Sinne der Erfindung die Vermeidung oder Reduzierung einer Übertragung von Schwingungen zwischen Bauelementen durch Zwischenschaltung von geeigneten elastischen Dämpfungselementen. Die Fortpflanzung von Schwingungen kann auftreten, wenn ein Bauelement vibriert und ein anderes Bauelement berührt oder starr mit diesem verbunden ist. Dann kann die Vibration des einen Bauelements auf das andere zumindest teilweise übertragen werden, was durch eine mechanische Entkopplung unter Zwischenschaltung elastischer Dämpfungselemente ganz oder teilweise verhindert werden kann.

In einem erfindungsgemäßen Bearbeitungsaufsatz für ein motorbetriebenes Küchengerät kann die Übertragung von Vibrationen zwischen Getriebe und Aufsatzgehäuse durch mechanische Entkopplung der Bauteile zumindest verringert werden. Solche Vibrationen können auftreten, wenn beispielsweise an einem in Rotation versetzten Bearbeitungswerkzeug, das über das Getriebe mit dem Motor des Küchengeräts in Verbindung steht, ein zu verarbeitendes Nahrungsmittel derart anhaftet, dass eine Rotationsunwucht eintritt. Dies kann beispielsweise der Fall sein, wenn an einem rotierenden Sieb eines Entsafters Trester des zu entsaftenden Nahrungsmittels in unterschiedlicher Schichtdicke zur Anhaftung kommt. Durch diese Rotationsunwucht kann eine abtriebsseitige Achse des Getriebes, die das Sieb in Rotation versetzt, radial in Schwingung versetzt werden. Auch können Vibrationen des Motors an das Getriebe weitergegeben werden.

Die mechanische Entkopplung von Getriebe und Aufsatzgehäuse kann verhindern, dass solche mechanischen Schwingungen auf das Aufsatzgehäuse übergehen. Dadurch kann die Standsicherheit und der allgemeine Bedienkomfort des Küchengeräts verbessert werden. Beispielsweise kann bei einem Standküchengerät verhindert werden, dass durch die Übertragung der Schwingungen auf das Gerätegehäuse und von dort weiter auf das gesamte Standküchengerät letzteres so stark in Vibration versetzt wird, dass es auf der Arbeitsunterlage zu wandern beginnen kann oder der Benutzer möglicherweise viel Kraft aufwenden muss, um es zu fixieren. Zudem könnten durch die mechanische Entkopplung Montageelemente, die zur Verbindung von Bearbeitungsaufsatz und Küchengerät eingesetzt werden können, für eine schwächere Beanspruchung optimiert werden, so dass möglicherweise Produktionskosten reduziert werden können oder die Montage vereinfacht werden kann. Außerdem kann durch eine mechanische Entkopplung der Vorteil erreicht werden, dass im Betrieb des Küchengeräts die Verminderung der Vibrationsausbreitung eine für den Benutzer angenehme Verminderung von Geräuschemissionen zur Folge haben kann, da diese ein Nebeneffekt von vibrierenden Teilen sein können. Dadurch, dass das Getriebe sich im austauschbaren Bearbeitungsaufsatz des Küchengeräts befindet, könnte die mechanische Entkopplung auch exakt auf die aufgrund der vorgesehenen Anwendung zu erwartende Vibrationsstärke hin optimiert werden. Somit kann ermöglicht werden, für jedes Aufsatzgerät funktionsabhängig eine besonders geeignete Vibrationsentkopplung von Getriebe und Aufsatzgehäuse mit individueller Festigkeit zu entwerfen.

Ein Küchengerät ist erfindungsgemäß, wenn es einen erfindungsgemäßen Bearbeitungsaufsatz umfasst. Ein solches Küchengerät kann beispielsweise zur Nahrungsmittelbearbeitung und insbesondere zum Entsaften verwendet werden. Jedoch wäre auch ein Küchengerät mit einem erfindungsgemäßen Bearbeitungsaufsatz erfindungsgemäß, das der Abfallzerkleinerung oder anderen küchenüblichen Aufgaben dienen kann, bei welchen eine Vibrationsentkopplung von Bearbeitungswerkzeug, Motor und Aufsatzgehäuse vorteilhaft ist. Ein erfindungsgemäßes Küchengerät kann zudem ein Gehäuse, einen Motor, einen Bearbeitungsbehälter, wie beispielsweise eine Rührschüssel oder einen Saftbehälter, ein oder mehrere Bearbeitungswerkzeuge oder Aufnahmen für solche Werkzeuge, einen Deckel und weitere aus Küchengeräten bekannte Elemente umfassen. Ein erfindungsgemäßes Küchengerät kann beispielsweise ein Standküchengerät oder ein Handküchengerät sein.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

In einer bevorzugten Ausführungsform ist am Getriebe des Bearbeitungsaufsatzes ein Aufnahmebereich vorhanden, der ein Dämpfungselement zur mechanischen Entkopplung von Getriebe und Aufsatzgehäuse aufnehmen kann. Beispielsweise kann ein elastisches Dämpfungselement aus Gummi, einem anderen Elastomer oder Schaumstoff mit guten vibrationsvermindernden Eigenschaften bestehen. Es kann am Aufnahmebereich des Getriebes aufgesteckt werden, so dass es kraft- und/oder formschlüssig am Getriebe befestigt sein kann. Alternativ kann ein solches Dämpfungselement auch am Getriebe angespritzt werden oder auf andere Weise stoffschlüssig mit dem Getriebe verbunden sein. Auch wäre denkbar, das Dämpfungselement am Getriebe anzuschrauben, anzunageln, anzukleben oder anderweitig unter Zuhilfenahme von Befestigungsmaterialien anzubringen. Der Aufnahmebereich für ein Dämpfungselement könnte aber auch an einem zwischengeschalteten Bauteil zwischen Getriebe und Aufsatzgehäuse vorhanden sein, solange dadurch die erfindungsgemäße Lösung erreicht werden kann, die Fortpflanzung von Schwingungen des Getriebes auf das Aufsatzgehäuse zu reduzieren oder zu verhindern.

Gemäß einer weiteren bevorzugten Ausführungsform des Bearbeitungsaufsatzes ist ein Aufnahmebereich für ein Dämpfungselement zur mechanischen Entkopplung an der Umfangslinie des Getriebes vorhanden. So kann eine besonders günstige Möglichkeit geschaffen werden, das Getriebe gegenüber dem Aufsatzgehäuse zu entkoppeln. Beispielsweise kann ein Dämpfungselement aus Gummi, einem anderen Elastomer oder Schaumstoff mit guten vibrationsdämpfenden Eigenschaften bestehen. Es kann an dem Aufnahmebereich an der Umfangslinie des Getriebes aufgesteckt werden, so dass es kraft- und/oder formschlüssig dort befestigt ist. Alternativ kann ein solches Dämpfungselement auch am Getriebe angespritzt werden oder auf andere Weise stoffschlüssig mit dem Getriebe verbunden sein. Auch wäre denkbar, das Dämpfungselement an dem Getriebe anzuschrauben, anzunageln, anzukleben oder anderweitig unter Zuhilfenahme von Befestigungsmaterialien anzubringen.

In einer bevorzugten Ausführungsform sind am Getriebe mehrere Aufnahmebereiche für Dämpfungselemente zur mechanischen Entkopplung vorhanden. Dies kann günstig sein, da die Vibrationsentkopplung so verbessert werden kann und auftretende Vibrationen und damit verbundene Kräfte über mehrere Dämpfungselemente abgeleitet werden können. Die Aufnahmebereiche können beispielsweise an der Umfangslinie vorhanden sein, aber auch an anderen Stellen des Getriebes, unter anderem an einer Ober- oder Unterseite oder auch an mehreren Seiten. Günstig können zwischen zwei und acht Aufnahmebereiche sein. Von diesem Zahlenbereich kann allerdings abgewichen werden, beispielsweise wenn es durch besondere Umstände hinsichtlich der Gesamtkonstruktion des Bearbeitungsaufsatzes, der zu absorbierenden Kräfte oder aus anderen Gründen günstig erscheint.

Erfindungsgemäß ist das Getriebe über das Dämpfungselement oder die Dämpfungselemente zur mechanischen Entkopplung mit dem Aufsatzgehäuse verbindbar. So können weitere Verbindungen zum Aufsatzgehäuse vermieden werden, was die Entkopplung stark verbessern kann. Beispielsweise könnten Dämpfungselemente auf dem Boden des Aufsatzgehäuses angebracht sein, auf denen das Getriebe gelagert ist. Erfindungsgemäß wird die Verbindung zum Aufsatzgehäuse ausschließlich über elastische Dämpfungselemente zur mechanischen Entkopplung hergestellt, und es kann eine verbesserte Entkopplung von Aufsatzgehäuse und Getriebe ermöglicht werden. Außerdem könnten andere Verbindungselemente wie Schrauben, Nägel oder Nieten eingespart werden. Sollten sich zwischen Getriebe und Aufsatzgehäuse noch weitere Bauteile befinden, kann natürlich auch eine Entkopplung von Getriebe und Aufsatzgehäuse erreicht werden, wenn man das Getriebe mit einem oder mehreren solcher Bauteile über Dämpfungselemente verbindet, wenn dadurch die Übertragung von Schwingungen des Getriebes auf das Aufsatzgehäuse mittelbar reduziert oder unterbunden werden kann.

In einer bevorzugten Ausführungsform ist an der Getriebelagerung des Bearbeitungsaufsatzes ein Aufnahmebereich vorhanden, der ein Dämpfungselement zur mechanischen Entkopplung von Getriebe und Aufsatzgehäuse aufnehmen kann. Beispielsweise kann ein elastisches Dämpfungselement aus Gummi, einem anderen Elastomer oder Schaumstoff mit guten vibrationsvermindernden Eigenschaften bestehen. Es kann am Aufnahmebereich der Getriebelagerung aufgesteckt werden, so dass es kraft- und/oder formschlüssig an der Getriebelagerung befestigt sein kann. Alternativ kann ein solches Dämpfungselement auch an der Getriebelagerung angespritzt werden oder auf andere Weise stoffschlüssig mit der Getriebelagerung verbunden sein. Auch wäre denkbar, das Dämpfungselement an der Getriebelagerung anzuschrauben, anzunageln, anzukleben oder anderweitig unter Zuhilfenahme von Befestigungsmaterialien anzubringen. Der Aufnahmebereich für ein Dämpfungselement könnte aber auch an einem zwischengeschalteten Bauteil zwischen Getriebelagerung und Aufsatzgehäuse vorhanden sein, solange dadurch die erfindungsgemäße Lösung erreicht werden kann, die Fortpflanzung von Schwingungen des Getriebes auf das Aufsatzgehäuse zu reduzieren oder zu verhindern.

Gemäß einer weiteren bevorzugten Ausführungsform des Bearbeitungsaufsatzes ist ein Aufnahmebereich für ein Dämpfungselement zur mechanischen Entkopplung an der Umfangslinie der Getriebelagerung vorhanden. So kann eine vorteilhafte Möglichkeit geschaffen werden, das Getriebe gegenüber dem Aufsatzgehäuse zu entkoppeln, falls eine Getriebelagerung das Getriebe trägt. Beispielsweise kann ein Dämpfungselement aus Gummi, einem anderen Elastomer oder Schaumstoff mit guten vibrationsdämpfenden Eigenschaften bestehen. Es kann an dem Aufnahmebereich der Getriebelagerung aufgesteckt werden, so dass es kraft- und/oder formschlüssig dort befestigt ist. Alternativ kann ein solches Dämpfungselement auch an der Getriebelagerung angespritzt werden oder auf andere Weise stoffschlüssig mit der Getriebelagerung verbunden sein. Auch wäre denkbar, das Dämpfungselement an der Getriebelagerung anzuschrauben, anzunageln, anzukleben oder anderweitig unter Zuhilfenahme von Befestigungsmaterialien anzubringen.

Es ist bevorzugt, dass an der Getriebelagerung mehrere Aufnahmebereiche für Dämpfungselemente zur mechanischen Entkopplung vorhanden sind. Dies kann vorteilhaft sein, da die Vibrationsentkopplung so verbessert werden kann und auftretende Vibrationen und damit verbundene Kräfte über mehrere Dämpfungselemente abgeleitet werden können. Die Aufnahmebereiche können beispielsweise an der Umfangslinie vorhanden sein, aber auch an anderen Stellen der Getriebelagerung, unter anderem an einer Ober- oder Unterseite oder auch an mehreren Seiten. Günstig können zwischen zwei und acht Aufnahmebereiche sein. Von diesem Zahlenbereich kann allerdings abgewichen werden, beispielsweise wenn es durch besondere Umstände hinsichtlich der Gesamtkonstruktion des Bearbeitungsaufsatzes, der zu absorbierenden Kräfte oder aus anderen Gründen günstig erscheint.

In einer bevorzugten Ausführungsform ist die Getriebelagerung über das Dämpfungselement oder die Dämpfungselemente zur mechanischen Entkopplung mit dem Aufsatzgehäuse verbindbar. So können weitere Verbindungen zum Aufsatzgehäuse vermieden werden, was die Entkopplung stark verbessern kann. Wird die Verbindung ausschließlich über elastische Dämpfungselemente zur mechanischen Entkopplung hergestellt, kann eine verbesserte Entkopplung von Getriebelagerung und Aufsatzgehäuse und somit Getriebe und Aufsatzgehäuse ermöglicht werden.

Es ist bevorzugt, dass die Getriebelagerung über das Dämpfungselement oder die Dämpfungselemente zur mechanischen Entkopplung am Aufsatzgehäuse hängend befestigt werden kann. In diesem Fall könnte die Getriebelagerung über die Dämpfungselemente beispielsweise mit der Innenseite einer Oberseite des Aufsatzgehäuses verbunden sein, so dass sie von diesem in der Betriebsstellung des Bearbeitungsaufsatzes herabhängt, ohne dass sie weitere Berührungspunkte mit dem Aufsatzgehäuse oder anderen durch das Getriebe möglicherweise in Vibration versetzbaren Teilen hätte. So ist gleichfalls eine Verbesserung der Vibrationsdämpfung möglich und das Getriebe ebenfalls gegenüber dem Aufsatzgehäuse mechanisch entkoppelt, weil die Vibrationsübertragung des Getriebes auf das Aufsatzgehäuse unter Zwischenschaltung der Dämpfungselemente zur mechanischen Entkopplung an der Getriebelagerung unterbrochen oder zumindest reduziert werden kann. Statt einer hängenden Montage der Getriebelagerung am Aufsatzgehäuse mittels Dämpfungselementen käme auch eine hängende Montage an anderen Teilen des Bearbeitungsaufsatzes in Frage, solange dadurch die erfindungsgemäße Lösung einer mechanischen Entkopplung von Getriebe und Aufsatzgehäuse erreicht werden kann.

In einer besonders bevorzugten Ausführungsform sind die Aufnahmebereiche für die Dämpfungselemente in gleichen Winkelabständen angeordnet. So kann erreicht werden, dass auftretende Kräfte und Vibrationen besonders gleichmäßig gedämpft und von den elastischen Dämpfungselementen zur mechanischen Entkopplung absorbiert werden.

In einer bevorzugten Ausführungsform ist die Getriebelagerung ein Getriebegehäuse. Dieses kann das Getriebe vollständig umgeben und so gegen Schmutz oder Reinigungswasser schützen, mit dem das Getriebe sonst beim Bearbeiten von Nahrungsmitteln oder Abspülen des Bearbeitungsaufsatzes in Verbindung kommen könnte. Fehlfunktionen und Verkürzung der Lebensdauer könnten die Folge sein. Das Getriebe könnte in einem Getriebegehäuse vollständig eingekapselt und die Öffnungen an den Eintrittsstellen der an- und abtriebsseitigen Achsen des Getriebes bestmöglich abgedichtet sein. Allerdings könnte auch ein käfigartiges Getriebegehäuse hinreichend sein, beispielsweise falls aufgrund anderer konstruktiver Maßnahmen das Getriebe nicht mit Reinigungswasser oder Nahrungsmitteln in Verbindung kommen kann oder eine weitergehende Abschirmung aus anderen Gründen nicht notwendig ist.

### Kurzbeschreibung der Zeichnungen

Weitere vorteilhafte Ausgestaltungen der Erfindung werden nachfolgend an Hand eines in den Zeichnungen dargestellten Ausführungsbeispiels, auf welches die Erfindung jedoch nicht beschränkt ist, näher beschrieben.

Es zeigen schematisch:
- Fig. 1: einen Querschnitt durch einen erfindungsgemäßen Bearbeitungsaufsatz;
- Fig. 2: einen weiteren Querschnitt durch einen erfindungsgemäßen Bearbeitungsaufsatz;
- Fig. 3: einen Detailausschnitt eines für die Erfindung besonders bedeutsamen Teils von Fig. 2.

### Detaillierte Beschreibung einer Ausführung der Erfindung

Bei der nachfolgenden Beschreibung einer bevorzugten Ausführungsform der vorliegenden Erfindung bezeichnen gleiche Bezugszeichen gleiche oder vergleichbare Komponenten.

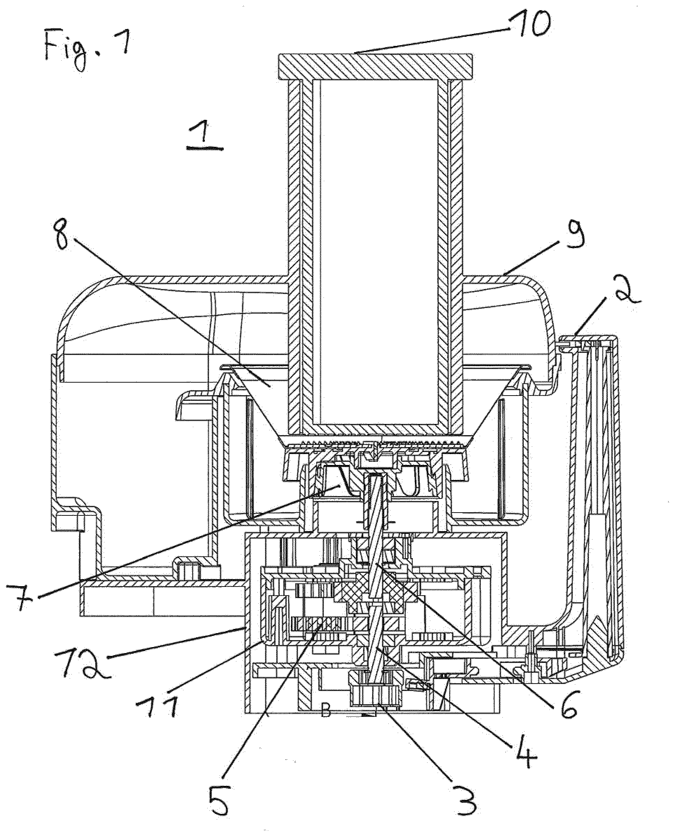

Fig. 1 zeigt einen Querschnitt durch einen erfindungsgemäßen Bearbeitungsaufsatz (1) für ein Küchengerät, in diesem Fall für ein Standküchengerät (nicht dargestellt). Mittels des Griffs (2) des Bearbeitungsaufsatzes (1) kann der Benutzer den Bearbeitungsaufsatz (1) vom Standküchengerät abheben bzw. den Bearbeitungsaufsatz (1) darauf aufsetzen. Ein Drehmoment wird von einem Motor des Küchengeräts (nicht dargestellt) über ein Kupplungsstück (3) auf eine antriebsseitige Achse (4) eines Getriebes (5) übertragen. Das Getriebe (5) ist in diesem Fall ein Untersetzungsgetriebe. Es reduziert die Motordrehzahl des Motors des Küchengeräts von 1200 auf 900 Umdrehungen pro Minute bei gleichzeitiger Erhöhung des Drehmoments. An einer abtriebsseitigen Achse (6) des Getriebes (5) ist eine Werkzeugaufnahme (7) angeschraubt. Über die Werkzeugaufnahme (7) wird einem Sieb (8) aus Edelstahl, das auf seiner Bodenplatte messerähnliche Kanten aufweist, das erhöhte Drehmoment zur Verfügung gestellt. Das so in Rotation versetzbare Sieb (8) kann Nahrungsmittel zerkleinern und/oder entsaften. Der Bearbeitungsaufsatz (1) mit dem Sieb (8) wird von einem Deckel (9) abgedeckt, durch dessen röhrenartige Öffnung (10) von oben die zu bearbeitenden Nahrungsmittel vom Benutzer auf die messerähnlichen Kanten des Siebs (8) gepresst werden können. Der freiwerdende Saft fließt durch die bei der Rotation des Siebs (8) entstehende Fliehkraft über den Rand des Siebs (8) in ein Behältnis, während der Nahrungsmitteltrester im Sieb (8) verbleibt. Das Getriebe (5) ist von einer Getriebelagerung (11), in diesem Fall einem Getriebegehäuse, eingekapselt. Die Getriebelagerung (11) weist an seiner Umfangslinie drei Aufnahmebereiche (nicht dargestellt) für elastische Dämpfungselemente (nicht dargestellt) in gleichen Winkelabständen auf, über die sie hängend am Aufsatzgehäuse (12) befestigt ist.

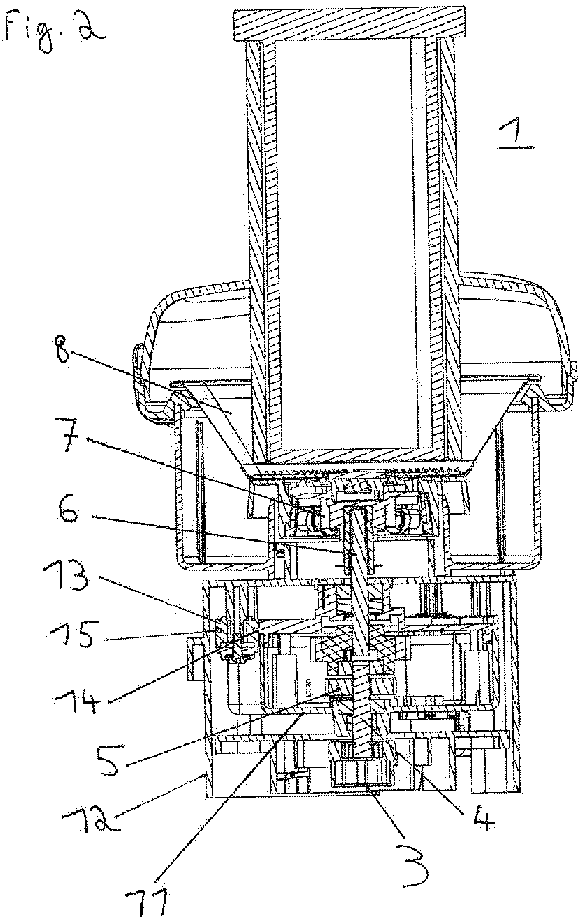

Fig. 2 zeigt eine weitere Querschnittszeichnung eines erfindungsgemäßen Bearbeitungsaufsatzes für ein Küchengerät, der im Vergleich mit Fig. 1 um seine Längsachse gedreht worden ist. Zu sehen ist insbesondere die Getriebelagerung (11). An seiner Umfangslinie weist die Getriebelagerung (11) in gleichen Winkelabständen drei Aufnahmebereiche für elastische Dämpfungselemente (13) zur mechanischen Entkopplung auf. Davon ist einer gezeigt. Die Aufnahmebereiche weisen jeweils einen Befestigungssteg (14) auf, so dass in den Aufnahmebereichen ohne Zuhilfenahme von weiteren Befestigungselementen elastische Dämpfungselemente (13) eingesteckt werden können. Diese sind bei geeigneter Dimensionierung zum einen kraftschlüssig über ihre Außenseite, zum anderen formschlüssig über eine mit dem Befestigungssteg (14) korrespondierende Vertiefung (15) an der Getriebelagerung (11) fixierbar. Die elastischen Dämpfungselemente (13) entkoppeln Getriebelagerung (11) und Aufsatzgehäuse (12) mechanisch, so dass die Fortpflanzung von Schwingungen des Getriebes (5) auf das Aufsatzgehäuse (12) reduziert werden kann.

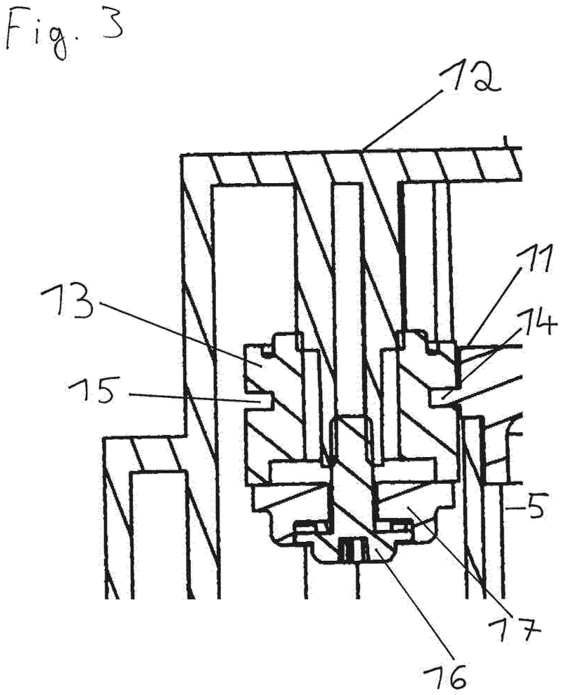

Fig. 3 zeigt einen Detailausschnitt eines für die Erfindung besonders bedeutsamen Teils von Fig. 2. Zu sehen ist ein elastisches Dämpfungselement (13) zur mechanischen Entkopplung an einer der Aufnahmebereiche der Getriebelagerung (11). Es ist aus Gummi gefertigt und am Aufnahmebereich der Getriebelagerung (11) aufgesteckt. Durch die auf der Umfangslinie des elastischen Elements umlaufende Vertiefung (15) kann mittels eines korrespondierenden Befestigungsstegs (14) an der Getriebelagerung (11) eine weitere Verbesserung der Verbindung zwischen elastischem Dämpfungselement (13) und Getriebelagerung (11) erreicht werden. Das elastische Dämpfungselement (13) ist axial derart durchbohrt, dass es durch diese Durchbohrung mit einer Schraube (16) am Aufsatzgehäuse (12), das eine entsprechende Öffnung mit Gewinde aufweist, befestigt werden kann. Die Befestigung des elastischen Dämpfungselements (13) an dem Aufsatzgehäuse (12) erfolgt unter Zwischenschaltung einer Scheibe (17) aus Kunststoff, die einen ausreichend großen Durchmesser aufweist, um ein Anpressen des elastischen Dämpfungselements (13) an das Aufsatzgehäuse (12) zu ermöglichen und den von der Schraube (16) erzeugten Druck gleichmäßig auf das elastische Dämpfungselement (13) überträgt. Hat der Schraubenkopf selbst jedoch einen ausreichend großen Durchmesser, so kann das elastische Dämpfungselement (13) auch direkt, ohne Zwischenschaltung einer solchen Scheibe (17), zwischen Schraubenkopf und Aufsatzgehäuse (12) klemmend gehalten werden. Die Getriebelagerung (11) ist über das elastische Dämpfungselement (13) hängend am Aufsatzgehäuse (12) befestigt.

Vibrationen des Getriebes (5) können in einem Bearbeitungsaufsatz (1) für ein Küchengerät durch verschiedene Ursachen hervorgerufen werden. Tritt beim Betrieb des Bearbeitungsaufsatzes (1), z.B. beim Entsaften eines Nahrungsmittels, eine Rotationsunwucht auf, beispielsweise weil sich im Sieb (8) eine Tresterschicht unterschiedlicher Dicke und damit unterschiedlicher Massenverteilung gebildet hat, kann die abtriebsseitige Achse (6) des Getriebes (5) unerwünscht in Schwingung versetzt werden. Auch kann eine Vibration des Motors auf das Getriebe (5) übergehen. Diese Vibrationen kann sich auf alle unmittelbar oder mittelbar durch starre Elemente mit dem Getriebe (5) in Kontakt stehenden Teile des Bearbeitungsaufsatzes übertragen, insbesondere auf das Aufsatzgehäuse (12). Daraus kann sich für den Benutzer eine Verschlechterung der Handhabbarkeit ergeben. Die Übertragung einer möglichen Vibration des Getriebes (5) auf das Aufsatzgehäuse (12) kann durch die elastischen Dämpfungselemente (13) an der Getriebelagerung (11) verringert oder verhindert werden. Sie erlauben eine hängende Montage der Getriebelagerung (11) am Aufsatzgehäuse (12), so dass starre Verbindungselemente, über die sich Schwingungen besonders gut übertragen können, zur direkten Verbindung von Getriebelagerung (11) und Aufsatzgehäuse (12) nicht mehr benötigt werden. Die Vibrationen können von den elastischen Dämpfungselementen (13) absorbiert werden, wodurch das Getriebe (5) und somit auch das Sieb (8) vom Aufsatzgehäuse (12) mechanisch entkoppelt sind.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Bearbeitungsaufsatz
- 2: Griff
- 3: Kupplungsstück
- 4: Antriebsseitige Achse
- 5: Getriebe
- 6: Abtriebsseitige Achse
- 7: Werkzeugaufnahme
- 8: Sieb
- 9: Deckel
- 10: Öffnung
- 11: Getriebelagerung
- 12: Aufsatzgehäuse
- 13: Dämpfungselement
- 14: Befestigungssteg
- 15: Vertiefung
- 16: Schraube
- 17: Scheibe

## Patentansprüche

1. Bearbeitungsaufsatz (1) für ein elektrisch betreibbares Küchengerät, der ein Aufsatzgehäuse (12), eine von einem Motor des Küchengerätes in Drehung versetzbare Werkzeugaufnahme (7), sowie ein Getriebe (5), das eine Kraft zwischen Motor und Werkzeug übertragen kann, umfasst, wobei das Getriebe (5) gegenüber dem Aufsatzgehäuse (12) mittels eines Dämpfungselements (13) mechanisch entkoppelt ist, **dadurch gekennzeichnet, dass** das Getriebe (5) ausschließlich über das Dämpfungselement (13) zur mechanischen Entkopplung mit dem Aufsatzgehäuse (12) verbindbar und daran hängend befestigt ist.

2. Bearbeitungsaufsatz (1) nach Anspruch 1, **dadurch gekennzeichnet, dass** am Getriebe (5) ein Aufnahmebereich vorhanden ist, der ein Dämpfungselement (13) zur mechanischen Entkopplung von Getriebe (5) und Aufsatzgehäuse (12) aufnehmen kann.

3. Bearbeitungsaufsatz (1) nach einem der vorhergehenden Ansprüche, **dadurch gekennzeichnet, dass** ein Aufnahmebereich für Dämpfungselemente (13) zur mechanischen Entkopplung an der Umfangslinie des Getriebes (5) vorhanden ist.

4. Bearbeitungsaufsatz (1) nach einem der vorhergehenden Ansprüche, **dadurch gekennzeichnet, dass** am Getriebe (5) mehrere Aufnahmebereiche für Dämpfungselemente (13) zur mechanischen Entkopplung vorhanden sind.

5. Bearbeitungsaufsatz (1) nach einem der vorhergehenden Ansprüche, **dadurch gekennzeichnet, dass** an der Getriebelagerung (11) ein Aufnahmebereich vorhanden ist, der ein Dämpfungselement (13) zur mechanischen Entkopplung von Getriebe (5) und Aufsatzgehäuse (12) aufnehmen kann.

6. Bearbeitungsaufsatz (1) nach einem der vorhergehenden Ansprüche, **dadurch gekennzeichnet, dass** ein Aufnahmebereich für Dämpfungselemente (13) zur mechanischen Entkopplung an der Umfangslinie der Getriebelagerung (11) vorhanden ist.

7. Bearbeitungsaufsatz (1) nach einem der vorhergehenden Ansprüche, **dadurch gekennzeichnet, dass** an der Getriebelagerung (11) mehrere Aufnahmebereiche für Dämpfungselemente (13) zur mechanischen Entkopplung vorhanden sind.

8. Bearbeitungsaufsatz (1) nach einem der vorhergehenden Ansprüche, **dadurch gekennzeichnet, dass** die Getriebelagerung (11) über das Dämpfungselement (13) oder die Dämpfungselemente (13) zur mechanischen Entkopplung mit dem Aufsatzgehäuse (12) verbindbar ist.

9. Bearbeitungsaufsatz (1) nach einem der vorhergehenden Ansprüche, **dadurch gekennzeichnet, dass** die Getriebelagerung (11) über das Dämpfungselement (13) oder die Dämpfungselemente (13) zur mechanischen Entkopplung am Aufsatzgehäuse (12) hängend befestigt werden kann.

10. Bearbeitungsaufsatz (1) nach Ansprüchen 4 und 7, **dadurch gekennzeichnet, dass** die Aufnahmebereiche in gleichen Winkelabständen angeordnet sind.

11. Bearbeitungsaufsatz (1) nach einem der vorhergehenden Ansprüche, **dadurch gekennzeichnet, dass** die Getriebelagerung (11) ein Getriebegehäuse ist.

12. Ein Küchengerät mit einem Bearbeitungsaufsatz (1) nach einem der vorhergehenden Ansprüche.

## Claims

1. Processing attachment (1) for an electrically operable kitchen device, which comprises an attachment housing (12), a tool receptacle (7) which can be made to rotate by a motor of the kitchen device, and a transmission (5), which can transmit a force between the motor and the tool, wherein the transmission (5) is mechanically decoupled from the attachment housing (12) by means of a damping element (13), **characterised in that** for mechanical decoupling the transmission (5) can be connected exclusively by way of the damping element (13) to the attachment housing (12) and is suspended thereupon.

2. Processing attachment (1) according to claim 1, **characterised in that** the transmission (5) has a receiving area, which can receive a damping element (13) for mechanical decoupling of the transmission (5) and the attachment housing (12).

3. Processing attachment (1) according to one of the preceding claims, **characterised in that** for mechanical decoupling a receiving area for damping elements (13) is present on the circumferential line of the transmission (5).

4. Processing attachment (1) according to one of the preceding claims, **characterised in that** for mechanical decoupling a number of receiving areas for damping elements (13) are present on the transmission (5).

5. Processing attachment (1) according to one of the preceding claims, **characterised in that** the transmission support (11) has a receiving area which can receive a damping element (13) for mechanical decoupling of the transmission (5) and the attachment housing (12).

6. Processing attachment (1) according to one of the preceding claims, **characterised in that** for mechanical decoupling a receiving area for damping elements (13) is present on the circumferential line of the transmission support (11).

7. Processing attachment (1) according to one of the preceding claims, **characterised in that** for mechanical decoupling a number of receiving areas for damping elements (13) are present on the transmission support (11).

8. Processing attachment (1) according to one of the preceding claims, **characterised in that** for mechanical decoupling the transmission support (11) can be connected by way of the damping element (13) or the damping elements (13) to the attachment housing (12).

9. Processing attachment (1) according to one of the preceding claims, **characterised in that** for mechanical decoupling the transmission support (11) can be suspended by way of the damping element (13) or the damping elements (13) on the attachment housing (12).

10. Processing attachment (1) according to claims 4 and 7, **characterised in that** the receiving areas are arranged at the same angular distances.

11. Processing attachment (1) according to one of the preceding claims, **characterised in that** the transmission support (11) is a transmission housing.

12. Kitchen device with a processing attachment (1) according to one of the preceding claims.

## Revendications

1. Élément rapporté de traitement (1) pour un appareil de cuisine fonctionnant électriquement, lequel comprend un boîtier (12) d'élément rapporté, un logement d'outil (7) pouvant être mis en rotation par un moteur de l'appareil de cuisine ainsi qu'un engrenage (5), lequel peut transmettre une force entre le moteur et l'outil, l'engrenage (5), par rapport au boîtier (12) d'élément rapporté, étant mécaniquement découplé au moyen d'un élément d'amortissement (13), **caractérisé en ce que** l'engrenage (5) est raccordable au boîtier (12) d'élément rapporté uniquement par l'intermédiaire de l'élément d'amortissement (13) destiné au découplage mécanique et **en ce qu'**il y est fixé de manière suspendue.

2. Élément rapporté de traitement (1) selon la revendication 1, **caractérisé en ce qu'**une zone de logement est présente sur l'engrenage (5), laquelle peut loger un élément d'amortissement (13) destiné au découplage mécanique de l'engrenage (5) et du boîtier (12) d'élément rapporté.

3. Élément rapporté de traitement (1) selon l'une quelconque des revendications précédentes, **caractérisé en ce qu'**une zone de logement est présente pour des éléments d'amortissement (13) destinés au découplage mécanique sur la ligne circonférentielle de l'engrenage (5).

4. Élément rapporté de traitement (1) selon l'une quelconque des revendications précédentes, **caractérisé en ce que** plusieurs zones de logement sont présentes sur l'engrenage (5) pour des éléments d'amortissement (13) destinés au découplage mécanique.

5. Élément rapporté de traitement (1) selon l'une quelconque des revendications précédentes, **caractérisé en ce qu'**une zone de logement est présente sur le logement d'engrenage (11), laquelle zone de logement peut loger un élément d'amortissement (13) destiné au découplage mécanique de l'engrenage (5) et du boîtier (12) d'élément rapporté.

6. Élément rapporté de traitement (1) selon l'une quelconque des revendications précédentes, **caractérisé en ce qu'**une zone de logement est présente pour des éléments d'amortissement (13) destinés au découplage mécanique sur la ligne circonférentielle du logement d'engrenage (11).

7. Élément rapporté de traitement (1) selon l'une quelconque des revendications précédentes, **caractérisé en ce que** plusieurs zones de logement sont présentes sur le logement d'engrenage (11) pour des éléments d'amortissement (13) destinés au découplage mécanique.

8. Élément rapporté de traitement (1) selon l'une quelconque des revendications précédentes, **caractérisé en ce que** le logement d'engrenage (11) est raccordable au boîtier (12) d'élément rapporté par l'intermédiaire de l'élément d'amortissement (13) ou des éléments d'amortissement (13) destinés au découplage mécanique.

9. Élément rapporté de traitement (1) selon l'une quelconque des revendications précédentes, **caractérisé en ce que** le logement d'engrenage (11) peut être fixé de manière suspendue au boîtier (12) d'élément rapporté par l'intermédiaire de l'élément d'amortissement (13) ou des éléments d'amortissement (13) destinés au découplage mécanique.

10. Élément rapporté de traitement (1) selon les revendications 4 et 7, **caractérisé en ce que** les zones de logement sont disposées dans des intervalles angulaires égaux.

11. Élément rapporté de traitement (1) selon l'une quelconque des revendications précédentes, **caractérisé en ce que** le logement d'engrenage (11) est un boîtier d'engrenage.

12. Appareil de cuisine comprenant un élément rapporté de traitement (1) selon l'une quelconque des revendications précédentes.
